# EUROPÄISCHE PATENTSCHRIFT

(11) **EP 3 804 912 B1**
(45) Veröffentlichungstag und Bekanntmachung des Hinweises auf die Patenterteilung: **03.04.2024**
(21) Anmeldenummer: 20199758.2
(22) Anmeldetag: 02.10.2020
(51) Int. Cl.: B25F 3/00

(54) **WERKZEUG, ABTRIEB UND WERKZEUGABTRIEB-WECHSELSYSTEM ZUM WECHSELN EINES ABTRIEBS EINES WERKZEUGS**
TOOL, ATTACHMENT AND TOOL ATTACHMENT CHANGING SYSTEM FOR CHANGING THE OUTPUT OF A TOOL
OUTIL, ENTRAÎNEMENT DE SORTIE ET SYSTÈME DE CHANGEMENT D'ENTRAÎNEMENT DE SORTIE D'OUTIL PERMETTANT DE CHANGER UN ENTRAÎNEMENT DE SORTIE D'UN OUTIL

(30) Priorität: 07.10.2019 DE 102019215328
(43) Veröffentlichungstag der Anmeldung: 14.04.2021
(73) Patentinhaber: Robert Bosch GmbH, 70442 Stuttgart (DE)
(72) Erfinder: Schneider, Joerg, 74427 Fichtenberg (DE)

(56) Entgegenhaltungen:
- EP-A1- 1 749 620
- DE-A1-102016 202 831
- US-A- 6 022 267
- US-A1- 2005 048 884
- US-A1- 2011 186 322

## Beschreibung

Die vorliegende Erfindung bezieht sich auf ein Werkzeug, einen Abtrieb und ein Werkzeugabtrieb-Wechselsystem zum Wechseln eines Abtriebs eines Werkzeugs. Insbesondere bezieht sich die Erfindung auf ein Werkzeug mit universeller Abtriebsschnittstelle.

Schraubwerkzeuge oder Bohrwerkzeuge oder Fräswerkzeuge werden zur Bearbeitung oder Behandlung von Werkstücken verwendet, um beispielsweise mindestens zwei Werkstücke zu einem Gegenstand zusammenzuschrauben, einen Gegenstand auseinanderzuschrauben, eine Öffnung in einem Gegenstand herzustellen, usw.

Je nach Bearbeitungsaufgabe sind unterschiedliche Platzverhältnisse vorhanden. Somit kann das Werkzeug gegebenenfalls nur in einer vorbestimmten Position gehalten werden, damit die Bearbeitungsaufgabe erfüllbar ist. Daher sind derartige Werkzeuge mit einem wechselbaren Abtrieb ausgestattet, wie beispielsweise einem Winkelabtrieb oder einem Geradabtrieb. Dabei ist sicherzustellen, dass die Abtriebe nach dem Wechsel fest und damit sicher an dem Werkzeug montiert sind.

Hierfür könnten die Abtriebe durch formschlüssige Steckkonturen gegen Verdrehen, und mittels Überwurfmutter oder axialer Verschraubung axial gesichert werden, wie beispielsweise in der DE 10 2016 202 831 A1 oder der US 2011/0186322 A1 oder der US 6,922,267 A gezeigt. So zeigt etwa die DE 10 2016 202 831 A1 ein Werkzeugabtrieb-Wechselsystem zum Wechseln eines Abtriebs eines Werkzeugs, wobei das System ein Werkzeug mit einem Werkzeuggehäuse und einen Abtrieb mit einem Abtriebsgehäuse aufweist, das zur Aufnahme eines Bearbeitungselements zur Bearbeitung mindestens eines Werkstücks ausgestaltet ist, und ein Kopplungsmodul zur Kopplung des Werkzeugs und des Abtriebs miteinander, wobei das Werkzeuggehäuse eine Schnittstelle aufweist und das Abtriebsgehäuse eine Schnittstelle aufweist, die mit dem Kopplungsmodul eine lösbare Befestigung des Abtriebs an dem Werkzeug bilden, bei der die Schnittstellen der Gehäuse zur Zentrierung und Verdrehsicherung des Abtriebs an dem Werkzeug ausgestaltet sind, und das Kopplungsmodul zur axialen Verspannung zur Sicherung des Abtriebs an dem Werkzeug ausgestaltet ist, um mit dem Bearbeitungselement mindestens ein Werkstück zu bearbeiten.

Problematisch ist jedoch, dass axiale Verschraubungen relativ großen Platzbedarf haben.

Dadurch wird das Werkzeug unhandlich, so dass der Einsatzbereich des Werkzeugs eingeschränkt ist. Bei Lösungen mit Überwurfmuttern kann der Montagebereich der Überwurfmutter nicht für andere Zwecke genutzt werden, wie beispielsweise den Anbau von zusätzlichen Bauteilen oder Durchführung von Leitungen oder Sonstiges. Dadurch wird die Ausstattungsmöglichkeit des Werkzeugs eingeschränkt, so dass damit auch der Einsatzbereich des Werkzeugs beschränkt ist.

Noch dazu ist bei den genannten Abtriebwechselsystemen kein werkzeugloser Wechsel des Abtriebs möglich. Zum Lösen der Überwurfmuttern ist ein Sonderwerkzeug, wie beispielsweise ein Spannschlüssel oder Hakenschlüssel notwendig. Dabei muss das Werkzeug zum Lösen der Überwurfmutter eingespannt werden, um das Lösedrehmoment abzustützen.

Daher ist es Aufgabe der vorliegenden Erfindung, ein Werkzeug, einen Abtrieb und ein Werkzeugabtrieb-Wechselsystem zum Wechseln eines Abtriebs eines Werkzeugs bereitzustellen, mit welchen die zuvor genannten Probleme gelöst werden können. Insbesondere sollen ein Werkzeug, ein Abtrieb und ein Werkzeugabtrieb-Wechselsystem zum Wechseln eines Abtriebs eines Werkzeugs bereitgestellt werden, mit welchen eine spielfreie, zentrische Befestigung eines Abtriebs an einem motorgetriebenen Werkzeug mit der Möglichkeit eines werkzeuglosen Schnellwechsels des Abtriebs und in kompakter Bauweise möglich ist.

Diese Aufgabe wird durch ein Werkzeug nach Anspruch 1 gelöst. Das Werkzeug hat ein Werkzeuggehäuse, das eine Schnittstelle aufweist, die zum Koppeln mit einer Schnittstelle eines Abtriebsgehäuses und zum Koppeln mit einem Kopplungsmodul ausgestaltet ist, wobei die Werkzeugschnittstelle für eine lösbare Befestigung der Abtriebsschnittstelle und des Kopplungsmoduls an dem Werkzeug ausgestaltet ist, wobei die Werkzeugschnittstelle ausgestaltet ist, mit der Abtriebsschnittstelle eine Zentrierung und Verdrehsicherung des Abtriebs an dem Werkzeug zu bewirken, und wobei die Werkzeugschnittstelle Kopplungselemente aufweist, die ausgestaltet sind, mit dem Kopplungsmodul zur axialen Verspannung von Werkzeug und Abtrieb für eine Sicherung des Abtriebs an dem Werkzeug zusammenzuwirken, um mit dem Bearbeitungselement mindestens ein Werkstück bearbeiten zu können, wie in Anspruch 1 beschrieben.

Das Werkzeug ist derart ausgestaltet, dass ein Wechsel des Abtriebs des Werkzeugs ohne Werkzeug oder zumindest ohne Sonderwerkzeug möglich ist. Hierbei ist eine spielfreie, zentrische Befestigung des Abtriebs an einem motorgetriebenen Werkzeug mit der Möglichkeit eines werkzeuglosen Schnellwechsels des Abtriebs möglich. Hierfür ist die Verwendung von Überwurfmuttern nicht erforderlich. Dadurch ist eine sehr kompakte Bauweise für die Befestigung des Abtriebs an dem Werkzeug realisiert.

Insgesamt ist der Abtrieb an dem Werkzeug unaufwändig und damit schnell und vergleichsweise komfortabel gegen einen anderen Abtrieb austauschbar, um ohne lange Verzögerung nacheinander verschiedene Bearbeitungsaufgaben abarbeiten zu können.

Damit ist das Werkzeug sehr gut an sich ändernde Aufgabenstellungen anpassbar. Als Folge davon ist das Werkzeug für einen großen Anwendungsbereich geeignet.

Bei industriellen Anlagen, in denen das Werkzeug zur Bearbeitung von Werkstücken einsetzbar ist, kann das Werkzeugabtrieb-Wechselsystem mit zu kürzeren Produktionszyklen beitragen. Dadurch können außerdem Stillstände einer industriellen Anlage vermieden werden, die unter Umständen durch eine zu lange Zykluszeit für eine Bearbeitung mit dem Werkzeug entstehen könnten. Zudem kann das Werkzeugabtrieb-Wechselsystem mit dazu beitragen, Anlagenstillstände so kurz wie möglich zu halten.

Vorteilhafte weitere Ausgestaltungen des Werkzeugs sind in den abhängigen Ansprüchen angegeben.

Denkbar ist, dass das Werkzeug zudem ein Kopplungsmodul zur Kopplung des Werkzeugs und des Abtriebs miteinander hat, wobei der Durchmesser der Werkzeugschnittstelle derart ausgestaltet ist, dass das Kopplungsmodul durch Aufspreizen unverlierbar an der Werkzeugschnittstelle aufrastbar ist.

Die Werkzeugschnittstelle kann eine Stirnverzahnung aufweisen, die in eine Stirnverzahnung des Abtriebsgehäuses eingreifen kann, um das Abtriebsgehäuse und das Werkzeuggehäuse zu koppeln. Die Stirnverzahnung kann eine Hirth-Verzahnung sein.

Möglicherweise ist das Werkzeug ein Schraubwerkzeug und/oder ein Bohrwerkzeug und/oder ein Fräswerkzeug.

In einer speziellen Ausgestaltung ist das Werkzeug ein handgeführtes Werkzeug. Zusätzlich oder alternativ kann das Werkzeug ein batteriebetriebenes oder kabelgebundenes Werkzeug sein.

Die zuvor genannte Aufgabe wird zudem durch einen Abtrieb für ein Werkzeug nach Anspruch 6 gelöst. Der Abtrieb hat ein Abtriebsgehäuse, das eine Schnittstelle aufweist, die zum Koppeln mit einer Schnittstelle eines Gehäuses des Werkzeugs und zum Koppeln mit einem Kopplungsmodul ausgestaltet ist, wobei die Abtriebsschnittstelle für eine lösbare Befestigung der Werkzeugschnittstelle und des Kopplungsmoduls an dem Abtrieb ausgestaltet ist, wobei die Abtriebsschnittstelle ausgestaltet ist, mit der Werkzeugschnittstelle eine Zentrierung und Verdrehsicherung des Abtriebs an dem Werkzeug vorzunehmen, und wobei die Abtriebsschnittstelle Kopplungselemente aufweist, die ausgestaltet sind, mit dem Kopplungsmodul zur axialen Verspannung von Werkzeug und Abtrieb für eine Sicherung des Abtriebs an dem Werkzeug zusammenzuwirken, um mit dem Bearbeitungselement mindestens ein Werkstück bearbeiten zu können, wie in Anspruch 6 beschrieben.

Der Abtrieb erzielt dieselben Vorteile, wie zuvor für das Werkzeug beschrieben. Vorteilhafte weitere Ausgestaltungen des Abtriebs sind in den abhängigen Ansprüchen angegeben.

Denkbar ist, dass der Abtrieb zudem ein Kopplungsmodul zur Kopplung des Werkzeugs und des Abtriebs miteinander hat, wobei der Durchmesser der Abtriebsschnittstelle derart ausgestaltet ist, dass das Kopplungsmodul durch Aufspreizen unverlierbar an der Abtriebsschnittstelle aufrastbar ist.

Die Abtriebsschnittstelle kann eine Stirnverzahnung aufweisen, die in eine Stirnverzahnung des Werkzeuggehäuses eingreifen kann, um das Abtriebsgehäuse und das Werkzeuggehäuse zu koppeln. Die Stirnverzahnung kann eine Hirth-Verzahnung sein.

Die zuvor genannte Aufgabe wird zudem durch ein Werkzeugabtrieb-Wechselsystem zum Wechseln eines Abtriebs eines Werkzeugs nach Anspruch 10 gelöst. Das Werkzeugabtrieb-Wechselsystem hat ein Werkzeug mit einem Werkzeuggehäuse, einen Abtrieb mit einem Abtriebsgehäuse, das zur Aufnahme eines Bearbeitungselements zur Bearbeitung mindestens eines Werkstücks ausgestaltet ist, und ein Kopplungsmodul zur Kopplung des Werkzeugs und des Abtriebs miteinander, wobei das Werkzeuggehäuse eine Schnittstelle aufweist und das Abtriebsgehäuse eine Schnittstelle aufweist, die mit dem Kopplungsmodul eine lösbare Befestigung des Abtriebs an dem Werkzeug bilden, bei der die Schnittstellen der Gehäuse zur Zentrierung und Verdrehsicherung des Abtriebs an dem Werkzeug ausgestaltet sind, und das Kopplungsmodul zur axialen Verspannung zur Sicherung des Abtriebs an dem Werkzeug ausgestaltet ist, um mit dem Bearbeitungselement mindestens ein Werkstück zu bearbeiten, wie in Anspruch 10 beschrieben.

Das Werkzeugabtrieb-Wechselsystem erzielt dieselben Vorteile, wie zuvor für das Werkzeug beschrieben. Vorteilhafte weitere Ausgestaltungen des Werkzeugabtrieb-Wechselsystems sind in den abhängigen Ansprüchen angegeben.

Möglicherweise sind die Werkzeugschnittstelle und die Abtriebsschnittstelle ausgestaltet, mindestens eine formschlüssige Kopplung zu bilden, welche das Werkzeuggehäuse und das Abtriebsgehäuse formschlüssig koppelt.

Erfindungsgemäß weist die Werkzeugschnittstelle und die Abtriebsschnittstelle schräge Flanken auf um den Formschluss mit schrägen Flanken des Kopplungsmoduls zu bilden.

Möglich ist auch, dass die Werkzeugschnittstelle partielle Aussparungen in dem Werkzeuggehäuse aufweist, die jeweils an die Form einer partiellen Aussparung des Kopplungsmoduls angepasst sind, wobei die Abtriebsschnittstelle partielle Aussparungen in dem Abtriebsgehäuse aufweist, die jeweils an die Form einer partiellen Aussparung des Kopplungsmoduls angepasst sind.

Gemäß einem Ausführungsbeispiel ist das Kopplungsmodul eine Spannschelle, die mit einem Befestigungselement mit zusätzlichem Werkzeug um die Werkzeugschnittstelle und die Abtriebsschnittstelle spannbar ist.

Gemäß einem Ausführungsbeispiel ist das Kopplungsmodul eine Spannschelle, die einen Exzenterhebel aufweist, um die Spannschelle um die Werkzeugschnittstelle und die Abtriebsschnittstelle zu spannen.

Mindestens ein zuvor beschriebenes Werkzeugabtrieb-Wechselsystem kann Teil einer industriellen Anlage zur Behandlung von Werkstücken sein, wobei das Werkzeugabtrieb-Wechselsystem zur Behandlung mindestens eines Werkstücks vorgesehen ist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 eine schematische Ansicht einer industriellen Anlage mit einem Werkzeug, an dem ein Werkzeugabtrieb-Wechselsystem gemäß einem ersten Ausführungsbeispiel montiert ist;
Fig. 2 eine dreidimensionale Ansicht eines Kopplungsmoduls gemäß dem ersten Ausführungsbeispiel, das zur mechanischen Kopplung des Werkzeugs mit einem Abtrieb für das Werkzeug vorgesehen ist; und
Fig. 3 eine dreidimensionale Ansicht eines Kopplungsmoduls gemäß einem zweiten Ausführungsbeispiel, das zur mechanischen Kopplung des Werkzeugs mit einem Abtrieb für das Werkzeug vorgesehen ist.

In den Figuren sind gleiche oder funktionsgleiche Elemente, sofern nichts anderes angegeben ist, mit denselben Bezugszeichen versehen.

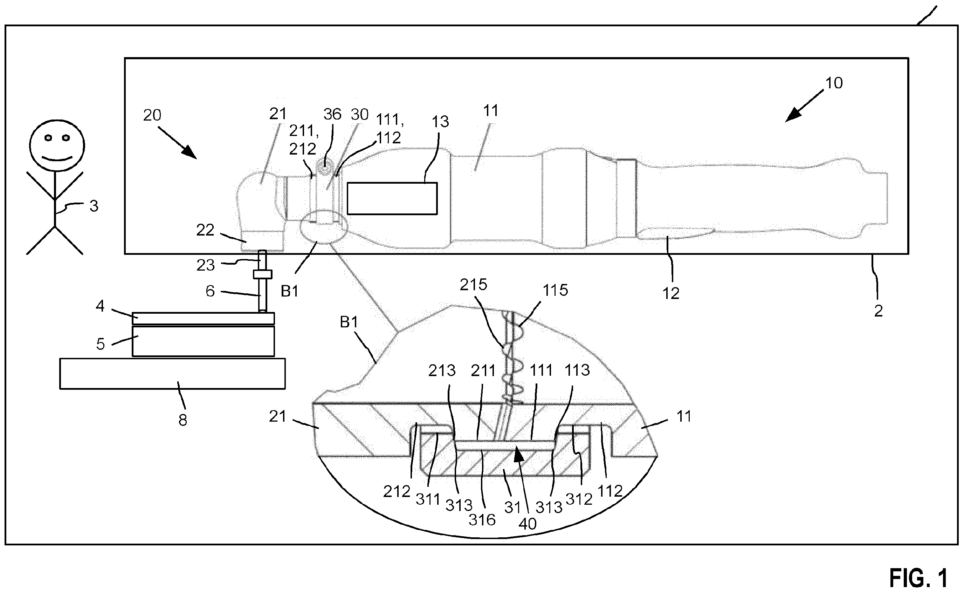

Fig. 1 zeigt schematisch eine industrielle Anlage 1, bei der ein Werkzeugabtrieb-Wechselsystem 2 von einem Benutzer 3 verwendbar ist, insbesondere wenn mindestens ein Werkstück 4, 5 bearbeitet werden soll. In das mindestens eine Werkstück 4, 5 kann beispielsweise ein Befestigungselement 6 zu befestigen sein.

Die industrielle Anlage 1 hat bei dem Beispiel von Fig. 1 eine Transporteinrichtung 8, um mindestens eines der Werkstücke 4, 5 zu transportieren. Die Transporteinrichtung 8 ist jedoch optional und muss nicht vorhanden sein. Zudem ist die Transporteinrichtung 8 beliebig ausführbar, insbesondere als Transportband, als Schlauch, als Vereinzeler, als Stapler, als Roboter, usw.

Die industrielle Anlage 1 ist beispielsweise eine Fertigungsanlage für Gegenstände, wie Fahrzeuge, Möbel, Elektrogeräte, usw.. Die industrielle Anlage 1 kann zusätzlich oder alternativ eine Anlage zur Wartung oder Demontage usw. von Gegenständen sein.

Das Werkzeugabtrieb-Wechselsystem 2 hat mindestens ein Werkzeug 10, mindestens einen Abtrieb 20 und mindestens ein Kopplungsmodul 30 zum lösbaren Koppeln des Werkzeugs 10 und eines derzeit gewünschten Abtriebs 20 miteinander. Wie in einem Abschnitt B1 unten in Fig. 1 gezeigt, kann das Kopplungsmodul 30 zumindest abschnittsweise durch einen Spalt 40 von dem Werkzeug 10 und dem Abtrieb 20 beabstandet sein. Dies ist beispielsweise unten in Fig. 1 mit der Vergrößerung des elliptischen Bereichs B1 des Kopplungsmoduls 30 genauer dargestellt.

Das Werkzeug 10 ist in Fig. 1 ein Schraub- und/oder Bohrwerkzeug. Zusätzlich oder alternativ ist das Werkzeug 10 zum Fräsen verwendbar. Alternativ ist das Werkzeug 10 zum Drehen verwendbar, insbesondere zum Drehen mindestens eines der Werkstücke 4, 5, um das mindestens eine der Werkstücke 4, 5 mit einem zusätzlichen Werkzeug zu bearbeiten.

Das Werkzeug 10 ist in Fig. 1 als mobiles Werkzeug, insbesondere als Handwerkzeug oder handgeführtes Werkzeug, ausgeführt, das von dem Benutzer oder Bediener 3 in der Hand geführt werden kann. Das mobile Werkzeug kann akkubetrieben oder netzbetrieben sein. Alternativ ist das Werkzeug 10 ein stationär verbautes Werkzeug, insbesondere eine Schraubspindel oder ein Schraubwerkzeug oder ein sonstiges Werkzeug, wie zuvor erwähnt.

Das Werkzeug 10 hat ein Gehäuse 11 mit einer Schnittstelle 111, 112, 115 zum Koppeln des Abtriebs 20 an dem Werkzeug 10. Die Schnittstelle 111, 112, 115 ist nachfolgend noch genauer beschrieben. An dem Gehäuse 11 ist ein Betätigungselement 12 zum Ein-/Ausschalten des Werkzeugs 10 vorgesehen. Optional hat das Betätigungselement 12 zudem ein Steuerelement zum Steuern der Geschwindigkeit eines Antriebs 13 des Werkzeugs 10. Der Antrieb 13 des Werkzeugs 10 ist über eine Welle mit einer Abtriebswelle des Abtriebs 20 gekoppelt, auch wenn dies in Fig. 1 nicht genauer dargestellt ist. Dadurch kann der Antrieb 13 des Werkzeugs 10 den Abtrieb 20 in eine Bewegung antreiben. Damit kann die gewünschte Bearbeitung mindestens eines Werkstücks 4, 5 stattfinden. Der Antrieb 13 kann ein Motor sein. Somit ist das Werkzeug 10 ein motorbetriebenes Werkzeug.

Der Antrieb 20 hat ein Gehäuse 21, an dem eine Schnittstelle 211, 212, 215 zum Koppeln des Werkzeugs 10 an dem Antrieb 20 vorgesehen ist. Die Schnittstelle 211, 212, 215 ist nachfolgend noch genauer beschrieben. Zudem hat der Abtrieb 20 eine Abtriebaufnahme 22, in der ein Bearbeitungselement 23 aufgenommen werden kann. Bei dem Beispiel von Fig. 1 ist die Abtriebaufnahme 22 als Wechselfutter ausgestaltet, in dem nacheinander verschiedene Bearbeitungselemente 23 aufgenommen werden können. Das Bearbeitungselement 23 ist bei dem Beispiel von Fig. 1 ein Schraubelement, das ein Befestigungselement 6 in mindestens eines der Werkstücke 4, 5 schrauben kann oder aus dem mindestens einen der Werkstücke 4, 5 herausschrauben kann. Selbstverständlich ist es möglich, dass der Abtrieb 20 zur Durchführung einer anderen Bearbeitungsaufgabe ausgestaltet ist, die an dem mindestens einen der Werkstücke 4, 5 auszuführen ist. Insbesondere ist der Abtrieb 20 zur Aufnahme eines Bohrelements oder Fräselements ausgestaltet oder als Nietkopf ausgestaltet. Andere Ausgestaltungen sind selbstverständlich möglich, wie beispielsweise bereits zuvor erwähnt.

Die Werkzeugschnittstelle 111, 112, 115 und die Abtriebsschnittstelle 211, 212, 215 sind ausgestaltet, um zum einen das Werkzeug 10 und den Abtrieb 20 in Richtung der Achse des Antriebs 13 spielfrei, zentrisch und verdrehsicher zu koppeln. Hierfür hat die Werkzeugschnittstelle 111, 112, 115 und die Abtriebsschnittstelle 211, 212, 215 eine Stirnverzahnung 115, 215. Beim Ansetzen von Abtrieb 20 und Werkzeug 10 aneinander greifen diese beiden Stirnverzahnungen 115 215 ineinander. Für die radiale Kopplung wird das Kopplungsmodul 30 eingesetzt.

Die Stirnverzahnung 115, 215 ist insbesondere eine Hirth-Verzahnung. Die Hirth-Verzahnung zeichnet sich dadurch aus, dass sie im gefügten Zustand das Verdrehen des Abtriebs 20 gegen das Werkzeug 10 verhindert. Noch dazu sorgt die Hirth-Verzahnung für eine Zentrierung des Abtriebs 20 an dem Werkzeug 10.

Die Stirnverzahnung 115, 215 ist dann nur noch axial zu verspannen. Daher sind die Werkzeugschnittstelle 111, 112, 115 und die Abtriebsschnittstelle 211, 212, 215 zum anderen ausgestaltet, um das Werkzeug 10 und den Abtrieb 20 mit dem Kopplungsmodul 30 an den Kopplungselementen 111, 112, 211, 212 radial zu fixieren. Hierfür haben das Kopplungsmodul 30 und die Kopplungselemente 111, 112, 211, 212 eine spezielle Ausgestaltung. Dies ist beispielsweise unten in Fig. 1 mit der Vergrößerung des elliptischen Bereichs B1 des Kopplungsmoduls 30 genauer dargestellt.

Die Gehäuse 11, 21 haben Aussparungen 112, 212 mit schrägen Flanken 113, 213, um die Kopplungselemente 111, 112, 211, 212 mit dem Kopplungsmodul 30 zu koppeln. Die Kopplung erfolgt insbesondere mit schrägen Innenflanken 313 des Kopplungsmoduls 30. Beim Spannen des Kopplungsmoduls 30 mit dem Befestigungselement 36 sorgen die schrägen Flanken 113, 213 in Kopplung mit den schrägen Innenflanken 313 des Kopplungsmoduls 30 für eine axiale Vorspannung zwischen dem Abtrieb 20 und dem Werkzeug 10. Die Aussparungen 112, 212 sind insbesondere als Einstiche in die Gehäuse 11, 21 ausgestaltet.

Das Kopplungsmodul 30 von Fig. 1 ist als Klemmschelle ausgestaltet, die bei den Kopplungselemente 111, 112, 211, 212 um die Gehäuse 11, 21 angeordnet werden kann, wie in Fig. 1 gezeigt. Das Kopplungsmodul 30 hat ein Befestigungselement 36, insbesondere eine Schraube, welches/welche die Klemmschelle an die Kopplungselemente 111, 112, 211, 212 klemmen kann, um die Gehäuse 11, 21 zu koppeln.

Wie unten in Fig. 1 in dem Bereich B1 dargestellt, hat das Kopplungsmodul 30 einen U-förmigen Querschnitt. Das Kopplungsmodul 30 greift mit den Schenkeln des Us in eine Wand 111 des Gehäuses 11 des Werkzeugs 10 und in eine Wand 211 des Gehäuses 21 des Abtriebs 20 ein. Hierfür hat das Gehäuse 11 des Werkzeugs 10 eine Aussparung 112. Das Gehäuse 21 des Abtriebs 20 hat eine Aussparung 212. Die Aussparungen 112, 212 kragen in Bezug auf die Antriebsachse des Antriebs 13 radial in das zugehörige Gehäuse 11, 21 hinein.

Genauer gesagt, greift ein Schenkel des Us des Kopplungsmoduls 30 in die Aussparung 112 in der Wand 111 des Werkzeuggehäuses 11 ein. Der andere Schenkel des Us des Kopplungsmoduls 30 greift in die Aussparung 212 in der Wand 211 in dem Abtriebsgehäuse 21 ein. Dabei bildet der eine Schenkel des Us des Kopplungsmoduls 30 mit der Aussparung 112 bzw. der Wand 111 des Werkzeuggehäuses 11 unter Verwendung der Flanken 113, 313 einen Formschluss. Zudem bildet der andere Schenkel des Us des Kopplungsmoduls 30 mit der Aussparung 212 bzw. der Wand 211 des Abtriebsgehäuses 21 unter Verwendung der Flanken 213, 313 einen Formschluss. Das Kopplungsmodul 30 bildet somit eine formschlüssige Verbindung mit den Gehäusen 11, 21.

Somit ist auch das Kopplungsmodul 30 in der Form entsprechend ausgestaltet, um mit der Schnittstelle 111, 112 des Werkzeugs 10 und mit der Schnittstelle 211, 212 des Abtriebs 20 zu koppeln.

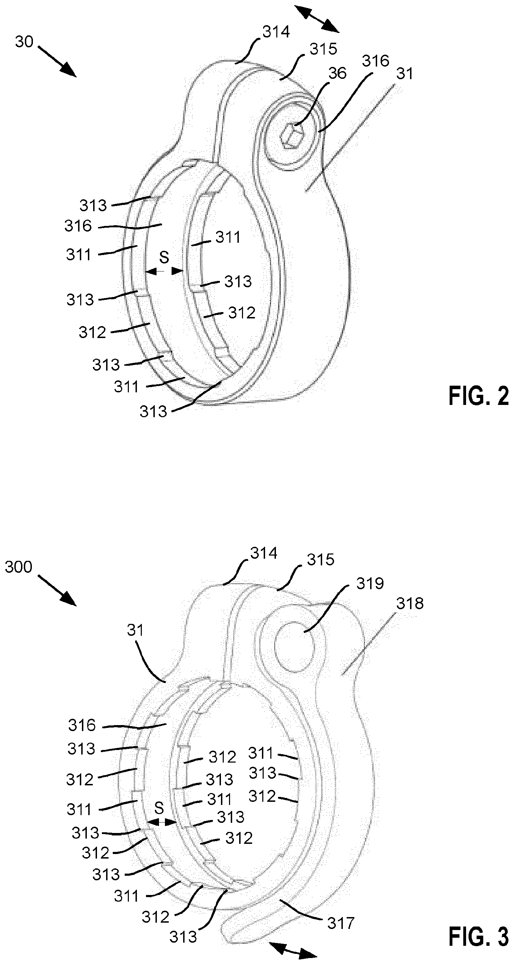

Die Schenkel des Us des Kopplungsmoduls 30 haben entlang des Umfangs des Kopplungsmoduls 30 unterschiedliche Längen, so dass Aussparungen 311 und Zähne 312 am Umfang des Kopplungsmoduls 30 gebildet sind. Dies ist besser aus Fig. 2 ersichtlich.

Gemäß Fig. 2 ist das Kopplungsmodul 30 in seinen Bereichen als offener Ring ausgestaltet, in denen mit den Kopplungselementen 111, 112, 211, 212 von Werkzeuggehäuse 11 und Abtriebsgehäuse 21 eine lösbare Kopplung hergestellt werden soll. Der offene Ring hat zwei Enden 314, 315, in denen eine Öffnung 316 vorhanden ist. Die Öffnung 316 kann innen ein Schraubgewinde haben. Ist in der Öffnung das Befestigungselement 36 befestigt, wie in Fig. 2 gezeigt, können die beiden Enden 314, 315 aneinander gezogen werden, so dass der Ring des Kopplungsmoduls 30 schließbar ist wie mit dem bidirektionalen Pfeil oben in Fig. 2 veranschaulicht. Fig. 2 zeigt den Zustand, in welchem das Befestigungselement 36 die beiden Enden 314, 315 aneinander befestigt und somit der Ring geschlossen ist.

Von der Innenseite 316 des Rings des Kopplungsmoduls 30 ragen die Schenkel des Us des Kopplungsmoduls 30 in Richtung des Zentrums des Rings. Jedes der Kopplungselemente 312 bildet eine zahnförmige Auskragung, die jeweils abwechselnd mit den als Aussparung ausgestalteten Kopplungselementen 311 des Innenumfangs des Kopplungsmoduls 30 angeordnet sind. Hierbei bilden die Schenkel des Us des Kopplungsmoduls 30 an der Innenseite 316 des Rings des Kopplungsmoduls 30 zwei Zahnreihen. Die Zahnreihen sind in axialer Richtung des Kopplungsmoduls 30 um einen vorbestimmten Abstand S beabstandet voneinander. Dadurch ist die Innenseite 316 des Kopplungsmoduls 30 über dem äußeren Rand der Werkzeugschnittstelle 111, 112, 115 und dem äußeren Rand der Abtriebsschnittstelle 211, 212, 215 angeordnet.

Demgemäß sind das Kopplungsmodul 30 und die Gehäuse 11, 21 segmentiert ausgespart. Dies ermöglicht eine einfache Montage des Kopplungsmoduls 30 an den Gehäusen 11, 21. Durch Fügen "Zahn auf Lücke", also Zahn 312 auf Aussparung 112 und Zahn 111 auf Aussparung 311 sowie Zahn 312 auf Aussparung 212 und Zahn 211 auf Aussparung 311 kann das Kopplungsmodul 30 auf die Gehäuse 11, 21 aufgesteckt werden. Ein Verdrehen des Kopplungsmoduls 30 auf "Zahn auf Zahn" sorgt für eine formschlüssige Verriegelung des Moduls 30 und der Gehäuse 11, 21. Durch Spannen des Kopplungsmoduls 30 wird nun die nötige axiale Vorspannung für eine spielfreie Verbindung von Werkzeug 10 und Abtrieb 20 generiert.

Durch die Hirth-Verzahnung des Kopplungsmoduls 30 ist eine Zentrierung und Verdrehsicherung sichergestellt. Die Ausgestaltung des Kopplungsmoduls 30 als Spannschelle sorgt für die erforderliche axiale Vorspannung.

Somit bilden die Schnittstellen 111, 112, 115, 211, 212, 215 der Gehäuse 11, 21 mit dem Kopplungsmodul 30 eine Kombination aus Hirth-Verzahnung und Spannschelle zur Befestigung verschiedener Abtriebe 20 an dem Werkzeug 10.

Bei dem vorliegenden Ausführungsbeispiel wird das Spannen des Kopplungsmoduls 30 mit einem zusätzlichen Werkzeug zum Betätigen des Befestigungselements 36 vorgenommen. Daher erfolgt das Spannen des Kopplungsmoduls 30 werkzeugbehaftet. Jedoch kann das Lösen des des Kopplungsmoduls 30 und damit des Abtriebs 20 von dem Werkzeug 10 ohne Einspannen des Werkzeugs 10 an beispielsweise einer Montagehilfe, wie einem Schraubstock oder Ähnlichem, durchgeführt werden.

Das Kopplungsmodul 30 bietet eine hohe Flexibilität durch freie Gestaltungsmöglichkeit der Klemmschelle. Es sind Varianten von Klemmschellen mit beispielsweise integrierter Aufhängeöse und/oder Anbaumöglichkeit für Zubehör oder Schnellspannfunktion möglich.

Ein anderer Vorteil liegt darin, dass das Kopplungsmodul 30 von dem Benutzer 3 sehr flexibel an die jeweiligen Nutzerwünsche angepasst werden kann. Dabei kann das Kopplungsmodul 30 durch wechselbare
Klemmschellen kundenspezifisch konfiguriert werden.

Fig 3 zeigt ein Kopplungsmodul 300 gemäß einem zweiten Ausführungsbeispiel. Das Kopplungsmodul 300 ist in weiten Teilen auf die gleiche Weise ausgestaltet wie das Kopplungsmodul des ersten Ausführungsbeispiels. Daher sind nachfolgend nur die Unterschiede zwischen den Ausführungsbeispielen beschrieben.

Im Unterschied zu dem vorangehenden Ausführungsbeispiel hat das Kopplungsmodul 300 einen Exzenterhebel 317. Ein Ende 318 des Exzenterhebels 317 ist schwenkbar um eine Welle 319 an dem einen Ende 315 des Kopplungsmoduls 300 gelagert.

Fig. 3 zeigt den Zustand, in welchem der Exzenterhebel 317 die beiden Enden 314, 315 aneinander befestigt und somit der Ring geschlossen ist. Ist der Exzenterhebel 317 dagegen von dem Ring des Kopplungsmoduls 300 weggeschwenkt, wie mit dem bidirektionalen Drehpfeil unten in Fig. 3 veranschaulicht, ist das Kopplungsmodul 300 geöffnet. In diesem Zustand kann der Antrieb 20 gewechselt werden.

Bei dem vorliegenden Ausführungsbeispiel kann das Spannen des Kopplungsmoduls 300 nur mit der Hand des Benutzers 3 vorgenommen werden. Somit wird das Spannen des Kopplungsmoduls 300 ohne zusätzliches Werkzeug vorgenommen, das zusätzlich zu dem Kopplungsmodul 30 von Fig. 2 vorzuhalten ist. Mit anderen Worten, das Spannen des Kopplungsmoduls 300 von Fig. 3 erfolgt werkzeuglos.

Gemäß einem dritten Ausführungsbeispiel kann bei dem Kopplungsmodul 300 von Fig. 3 eine Kulisse vorgesehen sein, die den Drehhub des Kopplungsmoduls 300 zum Öffnen oder Schließen bei einem Wechsel des Abtriebs 20 begrenzen kann. Beispielsweise kann die Kulisse den Drehhub des Kopplungsmoduls 300 auf die Position "offen" (Zahn auf Lücke) und "geschlossen" (Zahn auf Zahn) begrenzen.

Gemäß einem vierten Ausführungsbeispiel sind die Durchmesser der Gehäuse 11, 21 an den Schnittstellen 111, 112, 115, 211, 212, 215 derart ausgestaltet, dass das Kopplungsmodul 30 oder das Kopplungsmodul 300 durch Aufspreizen auf dem Werkzeug 10 unverlierbar aufgerastet werden kann. Alternativ sind die Durchmesser der Gehäuse 11, 21 an den Schnittstellen 111, 112, 211, 212 derart ausgestaltbar, dass das Kopplungsmodul 30, 300 durch Aufspreizen auf dem Abtrieb 20 unverlierbar aufgerastet werden kann. Hierbei kann das Kopplungsmodul 30, 300 entweder auf dem Gehäuse 11 oder dem Gehäuse 21 mit einem leichten Presssitz befestigt sein.

Gemäß einer Modifikation ist das Kopplungsmodul 30 zumindest teilweise mit dem Werkzeug 10 einteilig ausgestaltet. Alternativ ist das Kopplungsmodul 30 zumindest teilweise mit dem Abtrieb 20 einteilig ausgestaltet.

Die genannten Ausführungen gemäß dem vierten Ausführungsbeispiel und seiner Modifikation sind sehr vorteilhaft, da zusätzlich zu dem Werkzeug 10 und dem Abtrieb 20 kein drittes Einzelteil lose vorhanden ist, wenn der Antrieb 20 gewechselt wird.

Alle zuvor beschriebenen Ausgestaltungen der Anlage 1, des Werkzeugabtrieb-Wechselsystems 2, des Werkzeugs 10, des Abtriebs 20, der Kopplungsmodule 30, 300 und des Verfahrens können einzeln oder in allen möglichen Kombinationen Verwendung finden. Insbesondere können alle Merkmale und/oder Funktionen der zuvor beschriebenen Ausführungsbeispiele oder deren Modifikationen beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Das Werkzeug 10 kann insbesondere als Winkelkopfschraubwerkzeug oder als Flachschlüsselschraubwerkzeug ausgeführt sein.

In der industriellen Anlage 1 sind je nach Anwendungsfall beliebige Werkstoffe in beliebiger Kombination für die Werkstücke 4, 5 einsetzbar, wie beispielsweise Metall, Kunststoff, Leder, Glas, Papier, usw.. Zudem kann in einer derartigen Anlage ein Arbeitsverfahren ausgeführt werden, wie Transportieren der Werkstücke 4, 5 zu dem Werkzeug 10 in der industriellen Anlage 1 und/oder weg von dem Werkzeug 10 und/oder Stapeln der Werkstücke 4, 5 usw.

Das Werkzeug 10 ist alternativ als fest installiertes Werkzeug, insbesondere als Standwerkzeug, usw., ausführbar. In einem solchen Fall kann eine Halterung für das Werkzeug 10 vorhanden sein, so dass das Werkzeug 10 nicht im Raum bewegbar ist.

Das Werkzeug 10 kann alternativ ein Werkzeug 10 mit Aufhängung sein, das von dem Bediener 8 manövrierbar ist, um insbesondere eine horizontale Lage des Werkzeugs 10 im Raum je nach Bedarf variieren zu können. Die Aufhängung kann das jeweilige Werkzeug 10 auch vertikal oder in der Höhe verstellbar machen. Ganz allgemein kann die Lage des Werkzeugs 10 im Raum variierbar sein.

Wie zuvor beschrieben, ist es möglich, dass das Werkzeug 10 für den Handbetrieb mit Batterie, insbesondere wiederaufladbarer Batterie, ausgestaltet ist. Alternativ oder zusätzlich ist jedoch ein drahtgebundener Anschluss an ein Stromversorgungsnetz möglich. In diesem Fall ist das Werkzeug 10 ein kabelgebundenes Werkzeug.

## Patentansprüche

1. Werkzeug (10), mit
einem Werkzeuggehäuse (11), das eine Schnittstelle (111, 112, 115) aufweist, die zum Koppeln mit einer Schnittstelle (211, 212, 215) eines Abtriebsgehäuses (21) und zum Koppeln mit einem als Spannschelle ausgestalteten Kopplungsmodul (30; 300) ausgestaltet ist,
wobei die Werkzeugschnittstelle (111, 112, 115) für eine lösbare Befestigung der Abtriebsschnittstelle (211, 212, 215) und des Kopplungsmoduls (30; 300) an dem Werkzeug (10) derart ausgestaltet ist, dass das Kopplungsmodul (30; 300) um das Werkzeuggehäuse (11) und das Abtriebsgehäuse (21) angeordnet werden kann,
wobei die Werkzeugschnittstelle (111, 112, 115) ausgestaltet ist, mit der Abtriebsschnittstelle (211, 212, 215) eine Zentrierung und Verdrehsicherung des Abtriebs (20) an dem Werkzeug (10) zu bewirken, und
wobei die Werkzeugschnittstelle (111, 112, 115) Kopplungselemente (111, 112, 113) mit schrägen Flanken (113) aufweist, die ausgestaltet sind, mit dem Kopplungsmodul (30; 300) zur axialen Verspannung von Werkzeug (10) und Abtrieb (20) für eine Sicherung des Abtriebs (20) an dem Werkzeug (10) zusammenzuwirken, um mit dem Bearbeitungselement (23; 6) mindestens ein Werkstück (4; 4, 5) bearbeiten zu können.

2. Werkzeug (10) nach Anspruch 1,
zudem mit einem Kopplungsmodul (30; 300) zur Kopplung des Werkzeugs (10) und des Abtriebs (20) miteinander,
wobei der Durchmesser der Werkzeugschnittstelle (111, 112, 115) derart ausgestaltet ist, dass das Kopplungsmodul (30; 300) durch Aufspreizen unverlierbar an der Werkzeugschnittstelle (111, 112, 115) aufrastbar ist.

3. Werkzeug (10) nach Anspruch 1 oder 2,
wobei die Werkzeugschnittstelle (111, 112, 115) eine Stirnverzahnung (115) aufweist, die in eine Stirnverzahnung (215) des Abtriebsgehäuses (21) eingreifen kann, um das Abtriebsgehäuse (21) und das Werkzeuggehäuse (11) zu koppeln.

4. Werkzeug (10) nach Anspruch 3, wobei die Stirnverzahnung (115, 215) eine Hirth-Verzahnung ist.

5. Werkzeug (10) nach einem der vorangehenden Ansprüche,
wobei das Werkzeug (10) ein Schraubwerkzeug und/oder ein Bohrwerkzeug und/oder ein Fräswerkzeug ist, und/oder
wobei das Werkzeug (10) ein handgeführtes Werkzeug ist, und/oder
wobei das Werkzeug (10) ein batteriebetriebenes oder kabelgebundenes Werkzeug ist.

6. Abtrieb (20) für ein Werkzeug (10), wobei der Abtrieb (20) aufweist
ein Abtriebsgehäuse (21), das eine Schnittstelle (211, 212, 215) aufweist, die zum Koppeln mit einer Schnittstelle (111, 112, 115) eines Gehäuses (11) des Werkzeugs (10) und zum Koppeln mit als Spannschelle ausgestalteten Kopplungsmodul (30; 300) ausgestaltet ist,
wobei die Abtriebsschnittstelle (211, 212, 215) für eine lösbare Befestigung der Werkzeugschnittstelle (111, 112, 115) und des Kopplungsmoduls (30; 300) an dem Werkzeug (10) derart ausgestaltet ist, dass das Kopplungsmodul (30; 300) um das Werkzeuggehäuse (11) und das Abtriebsgehäuse (21) angeordnet werden kann,
wobei die Abtriebsschnittstelle (211, 212, 215) ausgestaltet ist, mit der Werkzeugschnittstelle (111, 112, 115) eine Zentrierung und Verdrehsicherung des Abtriebs (20) an dem Werkzeug (10) vorzunehmen, und
wobei die Abtriebsschnittstelle (211, 212, 215) Kopplungselemente (211, 212, 213) mit schrägen Flanken (213) aufweist, die ausgestaltet sind, mit dem Kopplungsmodul (30; 300) zur axialen Verspannung von Werkzeug (10) und Abtrieb (20) für eine Sicherung des Abtriebs (20) an dem Werkzeug (10) zusammenzuwirken, um mit dem Bearbeitungselement (23; 6) mindestens ein Werkstück (4; 4, 5) bearbeiten zu können.

7. Abtrieb (20) nach Anspruch 6,
zudem mit einem Kopplungsmodul (30; 300) zur Kopplung des Werkzeugs (10) und des Abtriebs (20) miteinander,
wobei der Durchmesser der Abtriebsschnittstelle (211, 212, 215) derart ausgestaltet ist, dass das Kopplungsmodul (30; 300) durch Aufspreizen unverlierbar an der Abtriebsschnittstelle (211, 212, 215) aufrastbar ist.

8. Abtrieb (20) nach Anspruch 6 oder 7, wobei die Abtriebsschnittstelle (211, 212, 215) eine Stirnverzahnung (115) aufweist, die in eine Stirnverzahnung (215) des Werkzeuggehäuses (11) eingreifen kann, um das Abtriebsgehäuse (21) und das Werkzeuggehäuse (11) zu koppeln.

9. Abtrieb (20) nach Anspruch 8, wobei die Stirnverzahnung (115, 215) eine Hirth-Verzahnung ist.

10. Werkzeugabtrieb-Wechselsystem (2) zum Wechseln eines Abtriebs (20) eines Werkzeugs (10), wobei das System (1) aufweist
ein Werkzeug (10) gemäß einem der Ansprüche 1 bis 5 und
einen Abtrieb (20) gemäß einem der Ansprüche 6 bis 9 sowie
ein als Spannschelle ausgestaltetes Kopplungsmodul (30; 300) zur Kopplung des Werkzeugs (10) und des Abtriebs (20) miteinander,
wobei das Werkzeuggehäuse (11) eine Schnittstelle (111, 112, 115) aufweist und das Abtriebsgehäuse (21) eine Schnittstelle (211, 212, 215) aufweist, die mit dem Kopplungsmodul (30; 300) eine lösbare Befestigung des Abtriebs (20) an dem Werkzeug (10) bilden, bei der das Kopplungsmodul (30; 300) um das Werkzeuggehäuse (11) und das Abtriebsgehäuse (21) angeordnet ist, und bei der die Schnittstellen (111, 112, 115, 211, 212, 215) der Gehäuse (11, 21) zur Zentrierung und Verdrehsicherung des Abtriebs (20) an dem Werkzeug (10) ausgestaltet sind, und das Kopplungsmodul (30; 300) zur axialen Verspannung zur Sicherung des Abtriebs (20) an dem Werkzeug (10) ausgestaltet ist, um mit dem Bearbeitungselement (23; 6) mindestens ein Werkstück (4; 4, 5) zu bearbeiten.

11. Werkzeugabtrieb-Wechselsystem (2) nach Anspruch 10, wobei die Werkzeugschnittstelle (111, 112, 115) und die Abtriebsschnittstelle (211, 212, 215) ausgestaltet sind, mindestens eine formschlüssige Kopplung zu bilden, welche das Werkzeuggehäuse (11) und das Abtriebsgehäuse (21) formschlüssig koppelt.

12. Werkzeugabtrieb-Wechselsystem (2) nach Anspruch 10 oder 11, wobei die schrägen Flanken (113) der Werkzeugschnittstelle (111, 112, 115) und die schrägen Flanken (213) der Abtriebsschnittstelle (211, 212, 215) den Formschluss mit schrägen Flanken des Kopplungsmoduls (30; 300) bilden.

13. Werkzeugabtrieb-Wechselsystem (2) nach einem der Ansprüche 10 bis 12,
wobei die Werkzeugschnittstelle (111, 112, 115) partielle Aussparungen (112) in dem Werkzeuggehäuse (11) aufweist, die jeweils an die Form einer partiellen Aussparung (311) des Kopplungsmoduls (30; 300) angepasst sind, und
wobei die Abtriebsschnittstelle (211, 212, 215) partielle Aussparungen (212) in dem Abtriebsgehäuse (21) aufweist, die jeweils an die Form einer partiellen Aussparung (311) des Kopplungsmoduls (30; 300) angepasst sind.

14. Werkzeugabtrieb-Wechselsystem (2) nach einem der Ansprüche 10 bis 13,
wobei das Kopplungsmodul (30) eine Spannschelle ist, die mit einem Befestigungselement (36) mit zusätzlichem Werkzeug um die Werkzeugschnittstelle (111, 112, 115) und die Abtriebsschnittstelle (211, 212, 215) spannbar ist, oder
wobei das Kopplungsmodul (300) eine Spannschelle ist, die einen Exzenterhebel (317) aufweist, um die Spannschelle um die Werkzeugschnittstelle (111, 112, 115) und die Abtriebsschnittstelle (211, 212, 215) zu spannen.

15. Industrielle Anlage (1) zur Behandlung von Werkstücken (4; 4, 5), wobei die industrielle Anlage (1) mindestens ein Werkzeugabtrieb-Wechselsystem (2) nach einem der Ansprüche 10 bis 14 aufweist, das zur Behandlung mindestens eines Werkstücks (4; 4, 5) vorgesehen ist.

## Claims

1. Tool (10), having
a tool housing (11) which has an interface (111, 112, 115) which is designed for coupling to an interface (211, 212, 215) of an output housing (21) and for coupling to a coupling module (30; 300) designed as a clamping collar,
wherein the tool interface (111, 112, 115) is designed for releasably fastening the output interface (211, 212, 215) and the coupling module (30; 300) to the tool (10) in such a way that the coupling module (30; 300) can be arranged around the tool housing (11) and the output housing (21),
wherein the tool interface (111, 112, 115) is designed, with the output interface (211, 212, 215), to effect centring and anti-rotational securing of the output (20) on the tool (10), and
wherein the tool interface (111, 112, 115) has coupling elements (111, 112, 113) with oblique flanks (113), which are designed to interact with the coupling module (30; 300) to axially brace the tool (10) and output (20) for securing the output (20) on the tool (10) in order to be able to process at least one workpiece (4; 4, 5) with the processing element (23; 6).

2. Tool (10) according to Claim 1,
additionally having a coupling module (30; 300) for coupling the tool (10) and the output (20) to each other, wherein the diameter of the tool interface (111, 112, 115) is designed in such a way that the coupling module (30; 300), by spreading open, can be captively latched on the tool interface (111, 112, 115).

3. Tool (10) according to Claim 1 or 2,
wherein the tool interface (111, 112, 115) has a spur toothing (115) which can engage in a spur toothing (215) of the output housing (21) in order to couple the output housing (21) and the tool housing (11).

4. Tool (10) according to Claim 3, wherein the spur toothing (115, 215) is a Hirth toothing.

5. Tool (10) according to one of the preceding claims, wherein the tool (10) is a screwing tool and/or a drilling tool and/or a milling tool, and/or
wherein the tool (10) is a hand-guided tool, and/or wherein the tool (10) is a battery-operated or cable-bound tool.

6. Output (20) for a tool (10), wherein the output (20) has
an output housing (21) which has an interface (211, 212, 215) which is designed for coupling to an interface (111, 112, 115) of a housing (11) of the tool (10) and for coupling to a coupling module (30; 300) designed as a clamping collar,
wherein the output interface (211, 212, 215) is designed for releasably fastening the tool interface (111, 112, 115) and the coupling module (30; 300) to the tool (10) in such a way that the coupling module (30; 300) can be arranged around the tool housing (11) and the output housing (21),
wherein the output interface (211, 212, 215) is designed, with the tool interface (111, 112, 115), to effect centring and anti-rotational securing of the output (20) on the tool (10), and
wherein the output interface (211, 212, 215) has coupling elements (211, 212, 213) with oblique flanks (213), which are designed to interact with the coupling module (30; 300) to axially brace the tool (10) and output (20) for securing the output (20) on the tool (10) in order to be able to process at least one workpiece (4; 4, 5) with the processing element (23; 6).

7. Output (20) according to Claim 6,
additionally having a coupling module (30; 300) for coupling the tool (10) and the output (20) to each other, wherein the diameter of the output interface (211, 212, 215) is designed in such a way that the coupling module (30; 300), by spreading open, can be captively latched on the output interface (211, 212, 215).

8. Output (20) according to Claim 6 or 7, wherein the output interface (211, 212, 215) has a spur toothing (115) which can engage in a spur toothing (215) of the tool housing (11) in order to couple the output housing (21) and the tool housing (11).

9. Output (20) according to Claim 8, wherein the spur toothing (115, 215) is a Hirth toothing.

10. Tool output exchange system (2) for exchanging an output (20) of a tool (10), wherein the system (1) has a tool (10) according to one of Claims 1 to 5, and
an output (20) according to one of Claims 6 to 9, and
a coupling module (30; 300) designed as a clamping collar for coupling the tool (10) and the output (20) to each other,
wherein the tool housing (11) has an interface (111, 112, 115) and the output housing (21) has an interface (211, 212, 215) which, with the coupling module (30; 300), form a releasable fastening of the output (20) to the tool (10) in which the coupling module (30; 300) is arranged around the tool housing (11) and the output housing (21), and in which the interfaces (111, 112, 115, 211, 212, 215) of the housings (11, 21) are designed for the centring and anti-rotational securing of the output (20) on the tool (10), and the coupling module (30; 300) is designed for axial bracing to secure the output (20) on the tool (10) in order to process at least one workpiece (4; 4, 5) with the processing element (23; 6).

11. Tool output exchange system (2) according to Claim 10, wherein the tool interface (111, 112, 115) and the output interface (211, 212, 215) are designed to form at least one form-fit coupling which couples the tool housing (11) and the output housing (21) in a form-fitting manner.

12. Tool output exchange system (2) according to Claim 10 or 11, wherein the oblique flanks (113) of the tool interface (111, 112, 115) and the oblique flanks (213) of the output interface (211, 212, 215) form the form-fit connection with oblique flanks of the coupling module (30; 300).

13. Tool output exchange system (2) according to one of Claims 10 to 12,
wherein the tool interface (111, 112, 115) has partial cutouts (112) in the tool housing (11), which are each adapted to the shape of a partial cutout (311) of the coupling module (30; 300), and
wherein the output interface (211, 212, 215) has partial cutouts (212) in the output housing (21), which are each adapted to the shape of a partial cutout (311) of the coupling module (30; 300).

14. Tool output exchange system (2) according to one of Claims 10 to 13,
wherein the coupling module (30) is a clamping collar which can be clamped around the tool interface (111, 112, 115) and the output interface (211, 212, 215) by a fastening element (36) with an additional tool, or
wherein the coupling module (300) is a clamping collar which has an eccentric lever (317) in order to clamp the clamping collar around the tool interface (111, 112, 115) and the output interface (211, 212, 215).

15. Industrial installation (1) for processing workpieces (4; 4, 5), wherein the industrial installation (1) has at least one tool output exchange system (2) according to one of Claims 10 to 14, which is provided for processing at least one workpiece (4; 4, 5).

## Revendications

1. Outil (10), avec
un boîtier d'outil (11) qui présente une interface (111, 112, 115) qui est conçue pour être couplée à une interface (211, 212, 215) d'un boîtier de sortie (21) et pour être couplée à un module de couplage (30 ; 300) conçu sous forme de collier de serrage,
dans lequel l'interface d'outil (111, 112, 115) est conçue pour une fixation amovible de l'interface de sortie (211, 212, 215) et du module de couplage (30 ; 300) sur l'outil (10) de telle sorte que le module de couplage (30 ; 300) peut être agencé autour du boîtier d'outil (11) et du boîtier de sortie (21),
dans lequel l'interface d'outil (111, 112, 115) est conçue pour effectuer avec l'interface de sortie (211, 212, 215) un centrage et un blocage en rotation de la sortie (20) sur l'outil (10), et
dans lequel l'interface d'outil (111, 112, 115) présente des éléments de couplage (111, 112, 113) avec des flancs obliques (113), qui sont conçus pour coopérer avec le module de couplage (30 ; 300) pour le serrage axial de l'outil (10) et de la sortie (20) pour un blocage de la sortie (20) sur l'outil (10), afin de pouvoir usiner au moins une pièce (4 ; 4, 5) avec l'élément d'usinage (23 ; 6) .

2. Outil (10) selon la revendication 1,
avec en outre un module de couplage (30 ; 300) pour coupler l'outil (10) et la sortie (20) l'un à l'autre,
dans lequel le diamètre de l'interface d'outil (111, 112, 115) est conçu de telle sorte que le module de couplage (30 ; 300) peut être encliqueté de manière imperdable sur l'interface d'outil (111, 112, 115) par écartement.

3. Outil (10) selon la revendication 1 ou 2,
dans lequel l'interface d'outil (111, 112, 115) présente une denture frontale (115) qui peut s'engager dans une denture frontale (215) du boîtier de sortie (21) afin de coupler le boîtier de sortie (21) et le boîtier d'outil (11) .

4. Outil (10) selon la revendication 3, dans lequel la denture frontale (115, 215) est une denture Hirth.

5. Outil (10) selon l'une quelconque des revendications précédentes,
l'outil (10) étant un outil de vissage et/ou un outil de perçage et/ou un outil de fraisage, et/ou
l'outil (10) étant un outil à main, et/ou
l'outil (10) étant un outil alimenté par batterie ou câblé.

6. Sortie (20) pour un outil (10), la sortie (20) présentant
un boîtier de sortie (21) présentant une interface (211, 212, 215) conçue pour être couplée à une interface (111, 112, 115) d'un boîtier (11) de l'outil (10) et pour être couplée à un module de couplage (30 ; 300) configuré sous forme de collier de serrage,
dans laquelle l'interface de sortie (211, 212, 215) est conçue pour une fixation amovible de l'interface d'outil (111, 112, 115) et du module de couplage (30 ; 300) à l'outil (10) de telle sorte que le module de couplage (30 ; 300) peut être agencé autour du boîtier d'outil (11) et du boîtier de sortie (21),
dans laquelle l'interface de sortie (211, 212, 215) est conçue pour effectuer avec l'interface d'outil (111, 112, 115) un centrage et un blocage en rotation de la sortie (20) sur l'outil (10), et
dans laquelle l'interface de sortie (211, 212, 215) présente des éléments de couplage (211, 212, 213) avec des flancs obliques (213), qui sont conçus pour coopérer avec le module de couplage (30 ; 300) pour le serrage axial de l'outil (10) et de la sortie (20) pour un blocage de la sortie (20) sur l'outil (10), afin de pouvoir usiner au moins une pièce (4 ; 4, 5) avec l'élément d'usinage (23 ; 6).

7. Sortie (20) selon la revendication 6,
avec en outre un module de couplage (30 ; 300) pour coupler l'outil (10) et la sortie (20) l'un à l'autre, dans laquelle le diamètre de l'interface de sortie (211, 212, 215) est conçu de telle sorte que le module de couplage (30 ; 300) peut être encliqueté de manière imperdable sur l'interface de sortie (211, 212, 215) par écartement.

8. Sortie (20) selon la revendication 6 ou 7, dans laquelle l'interface de sortie (211, 212, 215) présente une denture frontale (115) qui peut s'engager dans une denture frontale (215) du boîtier d'outil (11) afin de coupler le boîtier de sortie (21) et le boîtier d'outil (11) .

9. Sortie (20) selon la revendication 8, dans laquelle la denture frontale (115, 215) est une denture Hirth.

10. Système de changement de sortie d'outil (2) pour changer une sortie (20) d'un outil (10), le système (1) présentant
un outil (10) selon l'une quelconque des revendications 1 à 5, et
une sortie (20) selon l'une quelconque des revendications 6 à 9, et
un module de couplage (30 ; 300) conçu sous forme de collier de serrage pour coupler l'outil (10) et la sortie (20) l'un à l'autre,
dans lequel le boîtier d'outil (11) présente une interface (111, 112, 115) et le boîtier de sortie (21) présente une interface (211, 212, 215) qui forment avec le module de couplage (30 ; 300) une fixation amovible de la sortie (20) sur l'outil (10), dans lequel le module de couplage (30 ; 300) est agencé autour du boîtier d'outil (11) et du boîtier de sortie (21), et dans lequel les interfaces (111, 112, 115, 211, 212, 215) des boîtiers (11, 21) sont conçues pour le centrage et le blocage en rotation de la sortie (20) sur l'outil (10), et le module de couplage (30 ; 300) est conçu pour le serrage axial pour le blocage de la sortie (20) sur l'outil (10), afin d'usiner au moins une pièce (4 ; 4, 5) avec l'élément d'usinage (23 ; 6).

11. Système de changement de sortie d'outil (2) selon la revendication 10, dans lequel l'interface d'outil (111, 112, 115) et l'interface de sortie (211, 212, 215) sont conçues pour former au moins un couplage par complémentarité de forme qui couple par complémentarité de forme le boîtier d'outil (11) et le boîtier de sortie (21) .

12. Système de changement de sortie d'outil (2) selon la revendication 10 ou 11, dans lequel les flancs obliques (113) de l'interface d'outil (111, 112, 115) et les flancs obliques (213) de l'interface de sortie (211, 212, 215) forment la complémentarité de forme avec des flancs obliques du module de couplage (30 ; 300).

13. Système de changement de sortie d'outil (2) selon l'une quelconque des revendications 10 à 12,
dans lequel l'interface d'outil (111, 112, 115) présente des évidements partiels (112) dans le boîtier d'outil (11), chacun étant adapté à la forme d'un évidement partiel (311) du module de couplage (30 ; 300), et
dans lequel l'interface de sortie (211, 212, 215) présente des évidements partiels (212) dans le boîtier de sortie (21), chacun étant adapté à la forme d'un évidement partiel (311) du module de couplage (30 ; 300).

14. Système de changement de sortie d'outil (2) selon l'une quelconque des revendications 10 à 13,
dans lequel le module de couplage (30) est un collier de serrage qui peut être serré autour de l'interface d'outil (111, 112, 115) et de l'interface de sortie (211, 212, 215) avec un élément de fixation (36) avec un outil supplémentaire, ou
dans lequel le module de couplage (300) est un collier de serrage présentant un levier excentrique (317) afin de serrer le collier de serrage autour de l'interface d'outil (111, 112, 115) et de l'interface de sortie (211, 212, 215).

15. Installation industrielle (1) de traitement de pièces (4 ; 4, 5), l'installation industrielle (1) présentant au moins un système de changement de sortie d'outil (2) selon l'une quelconque des revendications 10 à 14, prévu pour traiter au moins une pièce (4 ; 4, 5).
